# FASCICULE DE BREVET EUROPEEN

(11) **EP 1 124 712 B1**
(45) Date de publication et mention de la délivrance du brevet: **25.10.2006**
(21) Numéro de dépôt: 99950852.6
(22) Date de dépôt: 27.10.1999
(51) Int. Cl.: B60S 1/32

(54) **BRAS D'ESSUIE-GLACE CONFORME EN DEFLECTEUR AERODYNAMIQUE**
SCHEIBENWISCHERARM, GESTALTET ALS AERODYNAMISCHER LUFTLEITER
WIPER ARM SHAPED AS AN AERODYNAMIC DEFLECTOR

(30) Priorité: 28.10.1998 FR 9813561
(43) Date de publication de la demande: 22.08.2001
(73) Titulaire: VALEO SYSTEMES D'ESSUYAGE, 78321 La Verrière (FR)
(72) Inventeur: JALLET, Sébastien, F-03270 Busset (FR); JARASSON, Jean-Michel, F-77500 Chelles (FR)
(74) Mandataire: Lemaire, Marc
(86) Numéro de dépôt international: PCT/FR1999/002619
(87) Numéro de publication internationale: WO 2000/024615

(56) Documents cités:
- EP-A- 0 234 286
- DE-A- 3 343 318
- DE-A- 19 818 723
- FR-A- 2 632 897
- FR-A- 2 747 975

## Description

La présente invention concerne un bras d'essuie-glace de véhicule automobile.

L'invention concerne plus particulièrement un bras d'essuie-glace du type comportant un corps de bras qui s'étend longitudinalement depuis son extrémité arrière d'entraînement vers son extrémité avant qui porte un balai d'essuie-glace, et du type dans lequel, en section transversale, au moins un tronçon du corps du bras présente une section en forme générale de U renversé délimité par deux ailes reliées entre elles par un dos supérieur s'étendant vers la surface à essuyer, composées d'une aile aval restant sensiblement perpendiculaire au dos et d'une aile amont inclinée en formant un angle aigu (A) par rapport à un plan médian parallèle à l'aile aval pour constituer un déflecteur aérodynamique intégré au bras d'essuie-glace qui, sous l'action d'un vent relatif d'orientation transversale d'amont en aval, tend à solliciter le bras d'essuie-glace vers la surface à essuyer, la valeur de l'angle aigu (A) variant le long du bras d'essuie-glace de telle manière que le bras comporte un tronçon principal (S3,S4) pour lequel la portance aérodynamique globale s'appliquant au bras d'essuie-glace est négative, le bras d'essuie-glace présentant, en vue de dessus, une forme générale courbée.

Un exemple d'un bras d'essuie-glace est décrit et représenté dans le document DE-A-3.343.318 dans lequel le bras d'essuie-glace est réalisé en une seule pièce en tôle découpée et pliée. Dans le tronçon formant le déflecteur aérodynamique, l'aile amont est globalement inclinée et incurvée avec sa concavité orientée vers le flux d'air correspondant au vent relatif venant s'appliquer au bras d'essuie-glace lors du mouvement de balayage de l'essuie-glace, en prenant en compte la direction d'avancement du véhicule.

L'invention a pour objet de proposer un bras d'essuie-glace de ce type qui est perfectionné en vue d'en améliorer les performances et la rigidité, et d'en simplifier la fabrication.

Dans ce but, l'invention propose un bras d'essuie-glace du type mentionné précédemment, caractérisé par la partie caractérisante de la revendication 1.

Selon divers modes de réalisation de l'invention :
- l'aile amont présente une surface sensiblement plane ;
- l'aile amont présente une surface dont la courbure, vue en coupe, varie progressivement d'une extrémité à l'autre du corps du bras d'essuie-glace ;
- la valeur de l'angle aigu d'inclinaison est comprise entre 32° et 35°;
- la hauteur de l'aile aval est inférieure à la hauteur de l'aile amont, et le rapport entre ces deux hauteurs est compris entre 0.65 et 0.85 ;
- en section transversale, la valeur de l'angle entre la droite passant par les bords inférieurs des ailes aval et amont et la tangente au dos supérieur au niveau du plan médian est compris entre 7° et 16° ;
- l'une au moins des ailes, notamment l'aile amont, comporte une nervure longitudinale de renfort ;
- l'une au moins des ailes, notamment l'aile aval, comporte un repli intérieur de renfort ;
- l'angle aigu d'inclinaison de l'aile amont varie progressivement de manière que les deux ailes soient parallèles aux extrémités arrière et avant du corps du bras d'essuie-glace ;
- le bras d'essuie-glace est réalisé en une seule pièce en tôle découpée et pliée.

D'autres caractéristiques et avantages de l'invention apparaîtront à la lecture de la description détaillée qui suit pour la compréhension de laquelle on se reportera aux dessins annexés dans lesquels :
- la figure 1 est une vue latérale en élévation d'un bras d'essuie-glace réalisé conformément aux enseignements de l'invention ;
- la figure 2 est une vue de dessus du bras d'essuie-glace de la figure 1 ;
- les figures 3 à 7 sont des vues en section transversale selon les lignes S1, S2, S3, S5 et S6 des figures 1 et 2 ;
- la figure 8 est une vue similaire à celle de la figure 4 qui illustre une variante de réalisation ; et
- la figure 9 est un diagramme illustrant des rapports dimensionnels du bras d'essuie-glace et des valeurs de portance aérodynamique et de rigidité du bras d'essuie-glace.

Dans la description qui va suivre d'un exemple de réalisation, les termes "horizontal", "vertical", "supérieur", "inférieur", etc. seront utilisés à titre non limitatif pour faciliter la compréhension de la description et ceci en référence aux figures.

Dans cet exemple, l'aile amont présente une surface plane. Dans d'autres formes de réalisation, l'aile amont présente une surface ayant, en coupe, une courbure, en particulier une faible courbure, cette courbure pouvant également varier d'une extrémité à l'autre du bras d'essuyage.

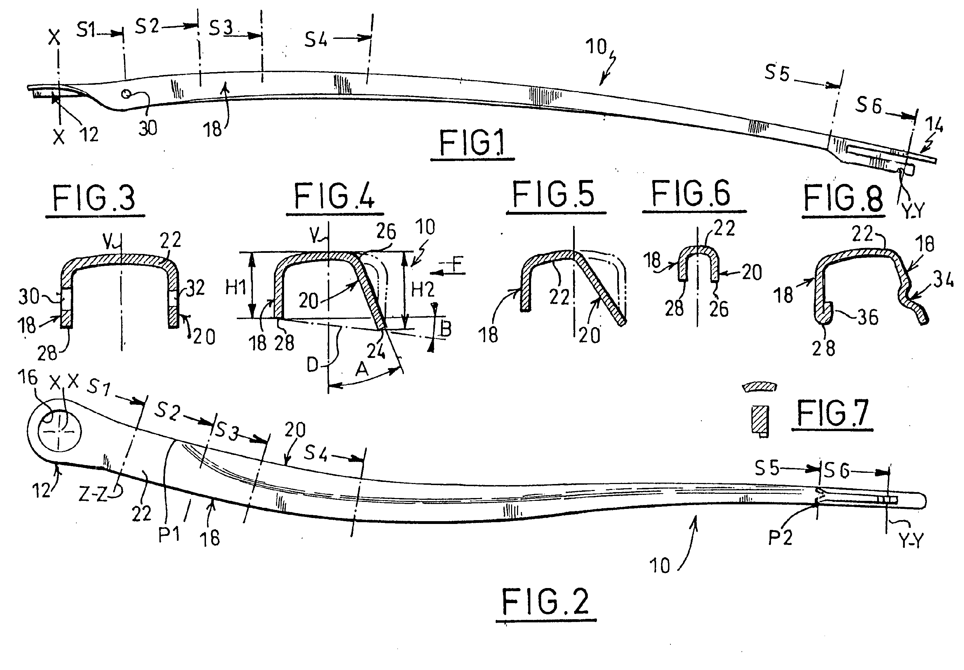

On a représenté sur les figures 1 à 7 un bras d'essuie-glace 10 qui est réalisé sous la forme d'une pièce unique en tôle découpée et pliée.

Le bras d'essuie-glace 10 s'étend longitudinalement depuis son extrémité arrière 12 jusqu'à son extrémité avant 14.

L'extrémité arrière 12 est prévue pour permettre l'entraînement du bras d'essuie-glace autour d'un axe sensiblement vertical X-X d'entraînement et elle comporte à cet effet un trou 16 pour le passage de l'extrémité libre supérieure (non représentée) d'un arbre d'entraînement en balayage alterné, ou linéaire, de l'essuie-glace.

L'extrémité longitudinale avant 14 est conformée pour constituer une extrémité d'articulation pour un bras d'essuie-glace (non représenté) qui est globalement monté pivotant autour d'un axe Y-Y sensiblement horizontal.

Selon une conception générale connue, le bras d'essuie-glace 10 présente en section transversale une forme de U renversé.

Ainsi, il comporte deux ailes latérales sensiblement verticales et parallèles 18 et 20 (voir figure 3) qui sont reliées entre elles par un dos supérieur sensiblement horizontal 22 qui est de profil légèrement incurvé avec sa convexité orientée verticalement vers le haut. Les ailes s'étendent à partir du dos supérieur 22 en direction de la surface à essuyer (non représentée).

Par rapport au flux d'air F (voir figure 4) qui correspond à la direction principale du vent relatif auquel est soumis le bras d'essuie-glace lors du mouvement de balayage et d'avancement du véhicule, on distingue l'aile aval 18 et l'aile amont 20.

Comme on peut le voir en considérant la figure 2, le bras d'essuie-glace 10 n'est pas rectiligne mais il présente une forme générale courbée.

Dans toutes les sections transversales du bras, l'aile aval 18 est sensiblement plane et verticale.

En partant de l'extrémité longitudinale arrière 12 du bras d'essuie-glace 10, à gauche en considérant les figures 1 et 2, on constate que l'aile amont 20 est aussi sensiblement plane et verticale, c'est-à-dire parallèle à l'aile aval 18 jusqu'à un point P1, situé entre les sections S1 et S2, à partir duquel l'aile amont 20 est plane mais est inclinée par rapport à un plan vertical médian V, parallèle à l'aile aval 18, en formant un angle aigu A par rapport à ce plan, l'inclinaison étant telle que le bord inférieur 24 de l'aile amont 20 est plus éloigné du plan vertical médian V que son bord supérieur 26.

De plus, à partir du point P1, le bord inférieur 24 de l'aile amont 20 est situé verticalement plus bas que le bord 28 de l'aile aval 18 alors que, jusqu'au point P1, les deux ailes amont 20 et aval 18 ont la même hauteur.

Si l'on se déplace le long du bras d'essuie-glace, d'arrière en avant à partir du point P1, on atteint le point P2 situé sensiblement au droit de la section S5 à partir duquel, comme on peut le voir à la figure 6, les deux ailes aval 18 et amont 20 sont à nouveau planes, verticales, parallèles entre elles et de hauteurs égales.

A proximité de l'extrémité arrière 12, les deux ailes aval 18 et amont 20 comportent chacune un trou 30, 32, ces trous étant alignés transversalement dans le plan de section S1 pour le passage d'une tige d'articulation d'axe Z-Z sensiblement horizontal et perpendiculaire à l'axe X-X.

Au delà du point P2, et donc du plan de section S5, le bras se prolonge longitudinalement vers l'avant par son extrémité avant conformée comme cela est illustré à la figure 7 avec les deux ailes latérales aval 18 et amont 20 qui se rejoignent au niveau du plan vertical médian de cette portion d'extrémité avant en deux ailes centrales adjacentes.

Conformément à l'une des caractéristiques de l'invention, la valeur de l'angle aigu A d'inclinaison de l'aile amont 20 varie le long du bras d'essuie-glace 10.

Plus précisément, elle est égale à environ 23° au droit de la section S2 (voir figure 4), puis elle augmente pour être maximale entre les sections S3 et S4.

En effet, le tronçon longitudinal du bras d'essuie-glace entre les sections S3 et S4 constitue le tronçon principal formant déflecteur aérodynamique pour lequel la portance aérodynamique globale s'appliquant au bras d'essuie-glace 10 est négative, la valeur de l'angle A étant comprise entre 30° et 45°, et de préférence entre 32° et 35°, le long de ce tronçon.

La valeur de l'angle A diminue progressivement vers l'extrémité avant à partir de la section S4 pour être ramenée à 0° au droit de la section S5.

Conformément à un mode de réalisation de l'invention, le rapport entre la hauteur H1 de l'aile aval 18 et la hauteur H2 de l'aile amont 20, lorsque cette dernière est inclinée, est compris entre 0,65 et 0,85.

De la même manière, l'angle aigu B, que forme la droite D, passant par les bords inférieurs 28 et 24 des ailes aval 18 et amont 20, par rapport à l'horizontale passant par le bord inférieur 28, est compris entre 7° et 16° le long du tronçon formant déflecteur aérodynamique.

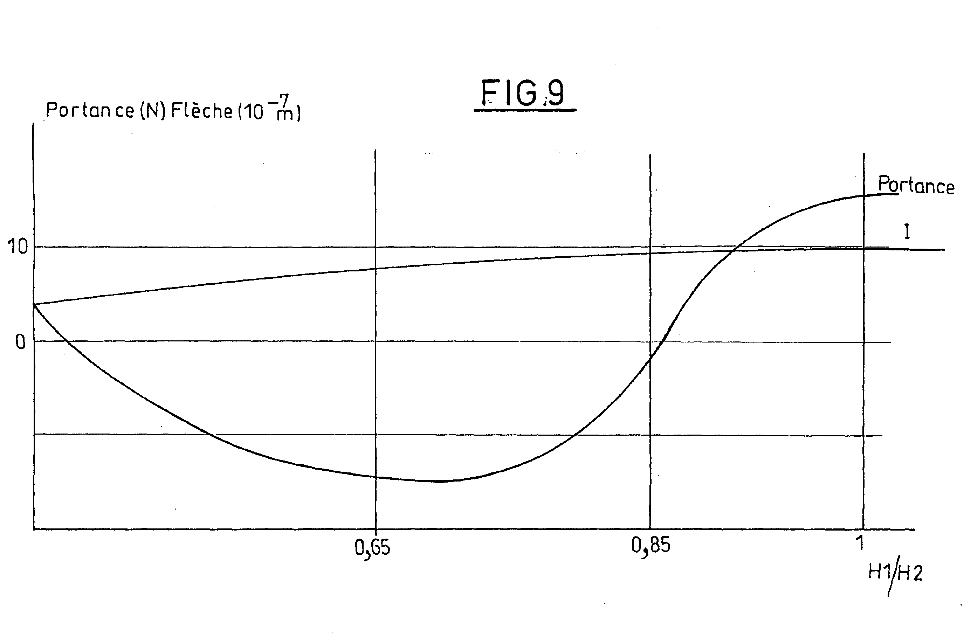

Le choix de ces paramètres de dimensionnement permet, dans la zone correspondant à la situation dans laquelle la portance aérodynamique est négative, c'est-à-dire lorsque le bras d'essuyage est plaqué verticalement vers le pare-brise et qu'il ne se soulève donc pas sous l'action du flux d'air, de ne pas trop réduire le moment de flexion I du bras dans cette zone, le moment de flexion 1 étant réduit au maximum de 30% par rapport à sa valeur maximale repérée 10 en ordonnée sur le diagramme de la figure 9.

Dans cette zone, dans laquelle le rapport des hauteurs est compris 0,65 et 0,85, il n'y a pas de torsion des sections transversales successives du bras en fonctionnement.

Grâce aux enseignements de l'invention, on obtient ainsi un compromis optimal entre la réduction du torseur aérodynamique (traînée, mais surtout portance) et l'accroissement de la rigidité d'un bras d'essuyage réalisé en une seule pièce.

Afin d'accroître encore cette rigidité, il est possible (voir figure 8) de former une nervure longitudinale 34 au moins dans l'aile amont 20 et de renforcer l'aile avant 18 par un repli intérieur 36 de la tôle à partir du bord inférieur 28 et verticalement vers le haut.

## Revendications

1. Bras d'essuie-glace (10) du type comportant un corps de bras qui s'étend longitudinalement depuis son extrémité arrière (12) d'entraînement vers son extrémité avant (14) qui porte un balai d'essuie-glace, et du type dans lequel, en section transversale, au moins un tronçon du corps du bras présente une section en forme générale de U renversé délimité par deux ailes (18, 20) reliées entre elles par un dos supérieur (22) s'étendant vers la surface à essuyer, composées d'une aile aval (18) restant sensiblement perpendiculaire au dos (22) et d'une aile amont (20) inclinée en formant un angle aigu (A) par rapport à un plan médian (V) parallèle à l'aile aval (18) pour constituer un déflecteur aérodynamique intégré au bras d'essuie-glace qui, sous l'action d'un vent relatif (F) d'orientation transversale d'amont en aval, tend à solliciter le bras d'essuie-glace (10) vers la surface à essuyer, la valeur de l'angle aigu (A) variant le long du bras d'essuie-glace (10) de telle manière que le bras comporte un tronçon principal (S3, S4) pour lequel la portance aérodynamique globale s'appliquant au bras d'essuie-glace (10) est négative, le bras d'essuie-glace (10) présentant, en vue de dessus, une forme générale courbée, **caractérisé en ce que** la valeur dudit angle aigu (A) est comprise entre 30° et 45° dans le tronçon principal (S3,S4) du corps du bras.

2. Bras d'essuie-glace selon la revendication 1, **caractérisé en ce que** l'aile amont (20) présente une surface sensiblement plane.

3. Bras d'essuie-glace selon la revendication 1, **caractérisé en ce que** l'aile amont (20) présente une surface dont la courbure, vue en coupe, varie progressivement d'une extrémité à l'autre du corps du bras d'essuie-glace.

4. Bras d'essuie-glace selon l'une quelconque des revendications précédentes, caractérisera en ce que la valeur dudit angle aigu (A) est comprise entre 32° et 35°.

5. Bras d'essuie-glace selon l'une quelconque des revendications précédentes, **caractérisé en ce que** la hauteur (H1) de l'aile aval (18) est inférieure à la hauteur (H2) de l'aile amont (20), et **en ce que** le rapport (H1/H2) entre ces deux hauteurs est compris entre 0.65 et 0.85.

6. Bras d'essuie-glace selon l'une quelconque des revendications précédentes, **caractérisé en ce que**, en section transversale, la valeur de l'angle (B) entre la droite (D) passant par les bords inférieurs (28, 24) des ailes aval (18) et amont (20) et la tangente au dos supérieur (22) au niveau du plan médian (V), est compris entre 7° et 16°.

7. Bras d'essuie-glace selon l'une quelconque des revendications précédentes, **caractérisé en ce que** l'une au moins des ailes, notamment l'aile amont (20), comporte une nervure longitudinale (34) de renfort.

8. Bras d'essuie-glace selon l'une quelconque des revendications précédentes, **caractérisé en ce que** l'une au moins des ailes, notamment l'aile aval (18), comporte un repli intérieur (36) de renfort.

9. Bras d'essuie-glace selon l'une quelconque des revendications précédentes, **caractérisé en ce que** ledit angle aigu (A) d'inclinaison de l'aile amont (20) varie progressivement de manière que les deux ailes (18, 20) soient parallèles aux extrémités arrière et avant du corps du bras d'essuie-glace.

10. Bras d'essuie-glace selon l'une quelconque des revendications précédentes, **caractérisé en ce qu'**il est réalisé en une seule pièce en tôle découpée et pliée.

## Claims

1. Windscreen -wiper arm (10) of the type comprising an arm body that extends longitudinally from its rear driving end (12) to its front end (14) which carries a windscreen -wiper blade, and of the type in which, in a cross-section, at least one portion of the body of the arm has a section with a general inverted U shape delimited by two wings (18, 20) connected to each other by means of a top spine (22) that extends towards the surface to be wiped, consisting of a front wing (18) which remains substantially perpendicular to the spine (22) and a rear wing (20) which is tilted forming an acute angle (A) in relation to a median plane (V) that is parallel to the front wing (18) such as to form an aerodynamic deflector built into the windscreen wiper arm which, under the action of a relative wind (F) in a front -to-back transversal direction, tends to force the windscreen-wiper arm (10) towards the surface to be wiped, the value of the acute angle (A) varying along the windscreen -wiper arm (10) so that the a rm comprises a main portion (S3, S4) for which the overall aerodynamic lift applied to the windscreen -wiper arm (10) is negative, the windscreen -wiper arm (10) presenting, when viewed from above, a generally curved shape, **characterised in that** the value of said acute angle (A) is comprised between 30° and 45° in the main portion (S3, S4) of the arm body.

2. Windscreen-wiper arm according to claim 1, **characterised in that** the rear wing (20) has a substantially flat surface.

3. Windscreen-wiper arm according to claim 1, **characterised in that** the rear wing (20) has a surface with a curvature, in a cross-section view, which varies gradually from one end of the windscreen-wiper arm body to the other.

4. Windscreen-wiper arm according to any one of the preceding claims, **characterised in that** the value of said acute angle (A) is comprised between 32° and 35°.

5. Windscreen-wiper arm according to any one of the preceding claims, **characterised in that** the height (H1) of the front wing (18) is less than the height (H2) of the rear wing (20) and **in that** the ratio (H1/H2) of these two heights is comprised between 0.65 and 0.85.

6. Windscreen-wiper arm according to any one of the preceding claims, **characterised in that**, in a cross-section view, the value of the angle (B) between the straight line (D) passing through the bottom edges (28, 24) of the front (18) and rear (20) wings and the tangent of the upper spine (22) at the level of the median plane (V) is comprised between 7° and 16°.

7. Windscreen-wiper arm according to any one of the preceding claims, **characterised in that** at least one of the wings, in particular the rear wing (20), comprises a longitudinal strengthening rib (34).

8. Windscreen-wiper arm according to any one of the preceding claims, **characterised in that** at least one of the wings, in particular the front wing (18), comprises an inner strengthening fold (36).

9. Windscreen-wiper arm according to any one of the preceding claims, **characterised in that** said acute angle (A) of inclination of the rear wing (20) varies gradually so that the two wings (18, 20) are parallel to the front and rear ends of the body of the windscreen-wiper arm.

10. Windscreen-wiper arm according to any one of the preceding claims, **characterised in that** it is made from a single piece of cut and folded sheet metal.

## Patentansprüche

1. Scheibenwischerarm (10) vom Typ mit einem Armkörper, der sich ab seinem rückwärtigen Antriebsende (12) längs bis zu seinem vorderen Ende (14) erstreckt, das ein Scheibenwischerblatt trägt, und vom Typ, bei dem im Querschnitt mindestens ein Abschnitt des Armkörpers einen Querschnitt in allgemeiner Form eines umgekehrten U enthält, das von zwei Flügeln (18, 20) begrenzt wird, die miteinander durch einen oberen Rücken (22) verbunden sind, der sich zur zu wischenden Fläche hin erstreckt, die bestehen aus einem nachfolgenden Flügel (18), der deutlich senkrecht zum Rücken (22) steht, und einem vor deren geneigten Flügel (20), der dabei einen spitzen Winkel (A) gegenüber einer mittleren Fläche (V) bildet, der parallel zum nachfolgenden Flügel (18) steht, um einen aerodynamischen im Scheibenwischerarm integrierten Abweiser zu bilden, der unter der Aktion eines relativen Windes (F) in Querausrichtung vor - und nachgelagert dazu neigt, den Scheibenwischerarm (10) zur zu wischenden Fläche anzusprechen, wobei der Wert des spitzen Winkels (A) den Scheibenwischerarm entlang (10) so variiert, daß der Arm einen Hauptabschnitt (S3, S4) umfaßt, für den die aerodynamische gesamte Tragwirkung, die auf den Scheibenwischerarm (10) wirkt, negativ ist, wobei der Scheibenwischerarm (10) bei Draufsicht eine allgemeine gekrümmte Form zeigt,
**dadurch gekennzeichnet, daß** der Wert des besagten spitzen Winkels (A) im Hauptabschnitt (S3, S4) des Armkörpers zwischen 30° und 45° beträgt.

2. Scheibenwischerarm nach Anspruch 1, **dadurch gekennzeichnet, daß** der vordere Flügel (20) eine deutliche ebene Oberfläche aufweist.

3. Scheibenwischerarm nach Anspruch 1, **dadurch gekennzeichnet, daß** der vordere Flügel (20) eine Oberfläche aufweist, deren Krümmung bei Schnittansicht von einem Ende des Scheibenwischerarms zum anderen nach und nach variiert.

4. Scheibenwischerarm nach einem beliebigen der vorstehenden Ansprüche, **dadurch gekennzeichnet, daß** der Wert des besagten spitzen Winkels (A) zwischen 32° und 35° beträgt.

5. Scheibenwischerarm nach einem beliebigen der vorstehenden Ansprüche, **dadurch gekennzeichnet, daß** die Höhe (H1) des nachfolgenden Flügels (18) geringer als die Höhe (H2) des vorderen Flügels (20) ist, und **dadurch**, daß das Verhältnis (H1/H2) zwischen diesen beiden Höhen zwischen 0,65 und 0,85 liegt.

6. Scheibenwischerarm nach einem beliebigen der vorstehenden Ansprüche, **dadurch gekennzeichnet, daß** im Querschnitt der Wert des Winkels (B) zwischen der Geraden (D), die an den Unterkanten (28, 24) des nachfolgenden Flügels (18) un d des vorderen Flügels (20) und die Tangente am oberen Rücken (22) an der mittleren Fläche (V) verläuft, zwischen 7° und 16° beträgt.

7. Scheibenwischerarm nach einem beliebigen der vorstehenden Ansprüche, **dadurch gekennzeichnet, daß** mindestens einer der Flügel, insbesondere der vordere Flügel (20), eine Längsrippe (34) zur Verstärkung aufweist.

8. Scheibenwischerarm nach einem beliebigen der vorstehenden Ansprüche, **dadurch gekennzeichnet, daß** mindestens einer der Flügel, insbesondere der nachfolgende Flüge 1 (18), einen inneren Falz (36) zur Verstärkung aufweist.

9. Scheibenwischerarm nach einem beliebigen der vorstehenden Ansprüche, **dadurch gekennzeichnet, daß** der besagte spitze Winkel (A) der Neigung des vorderen Flügels (20) nach und nach so variiert, daß die beiden Flügel (18, 20) parallel zum rückwärtigen und vorderen Ende des Körpers des Scheibenwischerarms stehen.

10. Scheibenwischerarm nach einem beliebigen der vorstehenden Ansprüche, **dadurch gekennzeichnet, daß** er aus einem einzigen Stück aus gestanztem und gefalztem Blech ausgeführt ist.
